# EUROPEAN PATENT SPECIFICATION

(11) **EP 3 146 782 B1**
(45) Date of publication and mention of the grant of the patent: **23.03.2022**
(21) Application number: 15805859.4
(22) Date of filing: 12.06.2015
(51) Int. Cl.: H04W 72/04, H04L 27/26, H04L 5/00

(54) **SYSTEM AND METHOD FOR ORTHOGONAL FREQUENCY DIVISION MULTIPLE ACCESS**
SYSTEM UND VERFAHREN FÜR ORTHOGONALEN FREQUENZVIELFACHZUGRIFF
SYSTÈME ET PROCÉDÉ POUR UN ACCÈS MULTIPLE PAR RÉPARTITION ORTHOGONALE DE LA FRÉQUENCE

(30) Priority: 12.06.2014 US 201462011475 P; 03.07.2014 US 201462020902 P; 23.07.2014 US 201462028208 P
(43) Date of publication of application: 29.03.2017
(73) Proprietor: Huawei Technologies Co., Ltd., Shenzhen, Guangdong 518129 (CN)
(72) Inventor: SUH, Jung Hoon, Kanata, Ontario CA (CA); BARBER, Phillip, McKinney, Ontario 75071 (CA); ABOUL-MAGD, Osama, Kanata, Ontario K2M 2K2 (CA)
(74) Representative: Thun, Clemens
(86) International application number: PCT/US2015/035696
(87) International publication number: WO 2015/192103

(56) References cited:
- US-A1- 2011 032 875
- US-A1- 2012 127 940
- US-A1- 2012 127 940
- US-A1- 2012 263 157
- US-A1- 2013 121 244
- US-A1- 2013 216 002
- US-A1- 2013 235 773
- US-A1- 2013 243 115

## Description

### TECHNICAL FIELD

The present invention relates to apparatuses and methods for wireless communications, and, in particular embodiments, to a method for transmitting data, a corresponding access point, an inter-related method for receiving data and a corresponding mobile device for orthogonal frequency division multiple access (OFDMA).

### BACKGROUND

Next generation Wireless Local Area Networks (WLANs) will be deployed in high-density environments that include multiple access points providing wireless access to large numbers of mobile stations in the same geographical area. Next-generation WLANs will also need to simultaneously support various traffic types having diverse quality of service (QoS) requirements, as mobile devices are increasingly used to access streaming video, mobile gaming, and other services. Institute of Electrical and Electronics Engineers (IEEE) 802.1 lax is being developed to address these challenges, and is expected to provide up to four times the throughput of IEEE 802.1 lac networks.

US 2013/121244 A1 discloses systems and methods for wireless communication of packets having a plurality of formats.

US 2012/263157 A1 discloses downclocking and/or adaptive sub-carriers for single user, multiple user, multiple access, and/or MIMO wireless communications.

US 2012/127940 A1 discloses that a VHT PLCP frame includes a VHTSIG-A field, a VHTSIG-B field, and a DATA field. Each of the VHTSIG-A field and the VHTSIG-B field includes control information, which is necessary for a reception STA to demodulate and decode the DATA field. The VHTSIG-A field may include information about a target STA of the VHTSIG-B field to be subsequently transmitted and information necessary to receive the VHTSIG-B field. The VHTSIG-B field includes a parameter value which is used for SDMA transmission every target STA. The DATA field includes SDMA-precoded data which will be transmitted to an STA.

### SUMMARY OF THE INVENTION

Technical advantages are generally achieved, by embodiments of this disclosure which describe a method for transmitting data, a corresponding access point, an inter-related method for receiving data and a corresponding mobile device for orthogonal frequency division multiple access.

### AMENDED DESCRIPTION

The present invention is defined by the independent claims. Further developments are provided by the dependent claims.

### BRIEF DESCRIPTION OF THE DRAWINGS

For a more complete understanding of the present invention, and the advantages thereof, reference is now made to the following descriptions taken in conjunction with the accompanying drawing, in which:
FIG. 1 illustrates a diagram of an embodiment wireless network;
FIG. 2 illustrates a diagram of an embodiment frame structure for a downlink OFDMA frame;
FIG. 3 illustrates a diagram of an embodiment tone allocation scheme for an orthogonal frequency division multiple access (OFDMA) frame;
FIG. 4 illustrates a diagram of an embodiment tone allocation scheme for a downlink OFDMA frame transmission;
FIG. 5 illustrates a diagram of an embodiment OFDMA frame format for an uplink transmission;

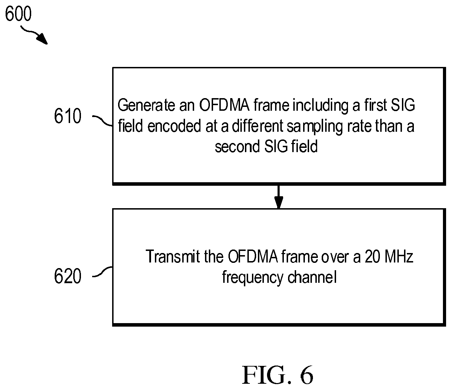

FIG. 6 illustrates a flowchart of an embodiment method for transmitting data in a wireless network;
FIG. 7 illustrates a flow chart of an embodiment method for an OFDMA frame transmission;
FIG. 8 illustrates a flow chart of an embodiment method for an OFDMA frame header transmission;
FIG. 9 illustrates a flow chart of an embodiment method for an uplink request frame transmission;
FIG. 10 illustrates a diagram of an embodiment processing system; and
FIG. 11 illustrates a diagram of an embodiment transceiver.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The structure, manufacture and use of the presently preferred embodiments are discussed in detail below. It should be appreciated, however, that the present invention provides many applicable inventive concepts that can be embodied in a wide variety of specific contexts. OFDMA tone allocations are discussed in U.S. Non-Provisional Application 14/738,411 [Atty. Docket No. HW 91022567US02].

Aspects of this disclosure communicate an embodiment OFDMA frame comprising a header with signal (SIG) fields that are encoded at different sampling rates than one another. In some embodiments, a first SIG field is encoded at sampling rate that is capable of being decoded by legacy mobile devices, while a second SIG field is encoded at sampling rate that is capable of being decoded by next-generation devices. In this way, the second SIG field may carry more information (per resource), while the first SIG field may allow the OFDMA frame to be decoded by legacy mobile devices. In one embodiment, the first signal field is encoded at a 64 point fast frequency transform (FFT) sampling rate, and the second SIG field is encoded at a 256 point FFT sampling rate. In some embodiments, the first SIG field may carry parameters for decoding the second SIG field, and the second SIG field may carry resource allocation information for a payload of the OFDMA frame. The SIG fields may also carry identifiers associated with an access point and/or mobile stations. In some embodiments, a given FFT sampling rates refer to encoding a field at the sampling rate in a 20 MHz frequency channel. For instance, encoding a field at a 64 point FFT sampling rate may refer encoding the field at 64 FFT per 20 MHz frequency channel, while encoding a field at a 256 point FFT sampling rate may refer encoding the field at 256 FFT per 20 MHz frequency channel.

Aspects of this disclosure also provide an embodiment technique for requesting uplink resources. In an embodiment, an AP may periodically allocate a contentious time window of an IEEE 802.11 channel to STAs in the coverage area of the AP. Those STAs may request uplink resources by sending a request frame in the contentious time window. Each request frame may be transmitted using a code division multiple access (CDMA) code assigned to, or selected by, the co-responding STA, thereby avoiding collisions between request frames communicated over the same time-frequency resources by different STAs. This CDMA-based uplink transmission request scheme may allow the AP to isolate the request frames in the code domain. These and other details are described in greater detail below.

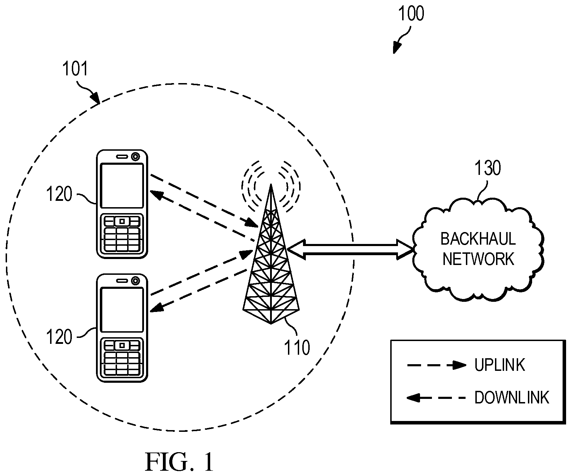

FIG. 1 illustrates a network 100 for communicating data. The network includes an access point (AP) 110 having a coverage area 101, mobile devices 120, as well as a backhaul network 130. The AP 110 may comprise any component capable of providing wireless access by, among other things, establishing uplink (dashed line) and/or downlink (dotted line) connections with the mobile devices 120, such as a base station, an enhanced base station (eNB), a femtocell, a WiFi Access Point and other wirelessly enabled devices. The mobile devices 120 may comprise any component capable of establishing a wireless connection with the AP, such as a mobile station (STA), a user equipment (UE), or other wirelessly enabled devices. The backhaul network 130 may be any component or collection of components that allow data to be exchanged between the AP 110 and a remote end. In some embodiments, there may be multiple such networks, and/or the network may comprise various other wireless devices, such as relays, low power nodes, etc.

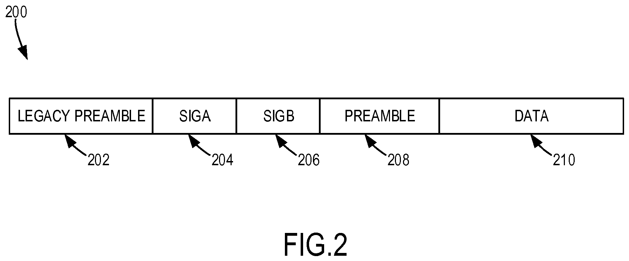

FIG. 2 illustrates a diagram of an embodiment frame structure for a downlink (DL) OFDMA frame 200. As shown, the downlink OFDMA frame 200 comprises a legacy preamble field 202, a first signal (SIGA) field 204, and a second signal (SIGB) field 206, a preamble field 208, and a data payload field 210. In this example, the SIGA field 204 is encoded at a different sampling rate than the SIGB field 206. In some embodiments, the SIGB field 206 is encoded at a higher sampling rate than the SIG A field 204, which allows the SIGB field 206 to carry more information per resource. In one embodiment, the SIGA field 204 is encoded at a 64 point Fast Frequency Transform (FFT) sampling rate, and the SIGB field 206 is encoded at a 256 point FFT sampling rate. In such an embodiment, the SIGA field 204 may consist of 64 tones, and the SIGB field 206 may consist of 256 tones. In some embodiments, the SIGA field 204 includes parameters for decoding the SIGB field 206, and the SIGB field 206 includes resource allocation information for a mobile device. The resource allocation information may indicate which resources in the data payload field 210 have been allocated to carry data to the mobile device. The SIGA field 204 and/or the SIGB field 206 may also carry an identifier of the access point that transmitted the DL OFDMA frame 200. In an embodiment, one or both of the SIGA field 204 and the SIGB field 206 are referred to as TGax SIG fields.

The legacy preamble field 202 may be backward compatible with IEEE 802.11a/n networks. The legacy preamble field 202 may be used to synchronize the data payload field 210 and avoid interference with other neighboring STAs in a cell. In one embodiment, the legacy preamble field 202 and the SIGA field 204 are encoded at one sampling rate (e.g., a 64 point FFT sampling rate), while the SIGB field 206, the Preamble field 208, and the data payload field 210 are encoded at another sampling rate (e.g., a 256 point FFT sampling rate). In another embodiment, the legacy preamble field 202, the SIGA field 204, the SIGB field 206, and the Preamble field 208 may be encoded at 64FFT per 20MHz frequency channel, while the data payload field 210 may be encoded at 256FFT per 20MHz frequency channel. The Preamble field 208 may be used to synchronize the data payload field 210 and avoid interference with other neighboring STAs in the cell.

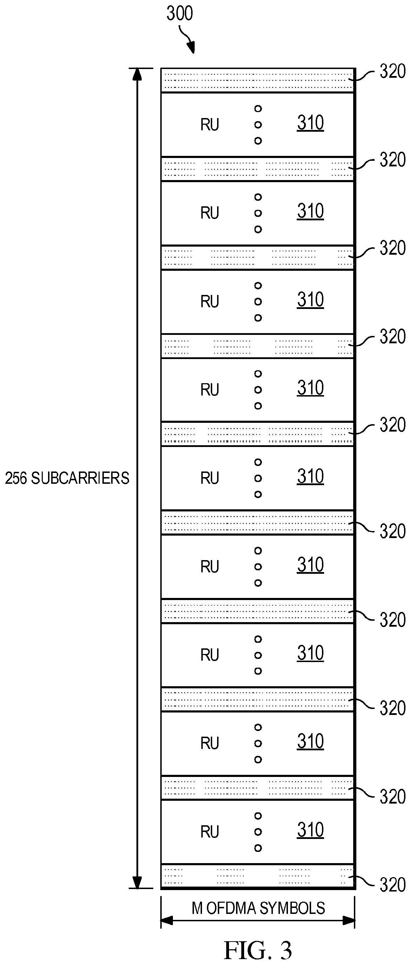

FIG. 3 is a diagram of an embodiment tone allocation scheme for a 256-tone payload 300 in an OFDMA frame communicated over a 20MHz frequency channel. As shown, the 256-tone payload 300 includes two-hundred and thirty-four tones carried in RUs 310, and twenty-two tones 320 excluded from the RUs 310. The twenty-two tones 320 excluded from the RUs 310 may include null tones, pilot tones, reserved tones, or combinations thereof. Each of the RUs 310 carried in the 256-tone payload 300 consists of a multiple of 26 tones. In the example provided by FIG. 3, the two-hundred and thirty-four tones are distributed into nine RUs 310 such that each of the RUs consists of 26 tones (i.e., one multiple of 26 tones). However, it should be appreciated that the two-hundred and thirty-four tones may be distributed into fewer RUs. For example, the two-hundred and thirty-four tones may be distributed into three 78-tone RUs. It should also be appreciated that the two-hundred and thirty-four tones may be unevenly distributed into the RUs 310 such that at least two RUs in the 256-tone payload 300 are different sizes. In one example, the two-hundred and thirty-four tones are distributed into four 52-tone RUs and one 26-tone RU. In another example, the two-hundred and thirty-four tones are distributed into two 104-tone RUs and one 26-tone RU. In yet another example, all of the two-hundred and thirty-four tones are distributed into a single RU. Other configurations are also possible. It should also be appreciated that the twenty-two tones 320 excluded from the RUs 310 may be arranged in any location, or set of locations, within the 256-tone payload 300. For example, each of the twenty-two tones 320 could be positioned in a contiguous portion of the 256-tone payload 300, e.g., in the center, top, or bottom portion of the 256-tone payload. As another example, the twenty-two tones 320 could be distributed evenly, or unevenly, across the 256-tone payload 300, e.g., in-between the RUs 320, etc.

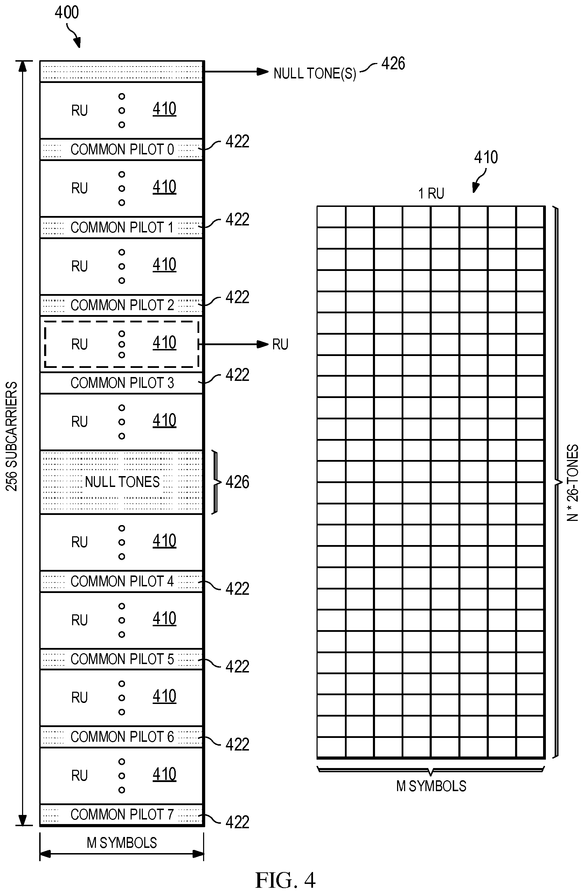

FIG. 4 illustrates a diagram of an embodiment tone allocation scheme for a 256-tone payload 400 in an OFDMA frame communicated over a 20MHz frequency channel. As shown, the 256-tone payload 400 includes two-hundred and thirty-four tones carried in RUs 410, 8 common pilot tones 422, and 14 null tones 426. The common pilot tones 422 and the null tones 426 are excluded from the RUs 410. In one example, the 14 null tones 426 consist of 13 guard tones and 1 DC tone. In other examples, the 14 null tones 426 include multiple DC tones and 12 or fewer guard tones.

Each of the RUs 410 consists of a multiple of 26 data tones. In one embodiment, the 256-tone payload 400 is carried in a downlink OFDMA frame.

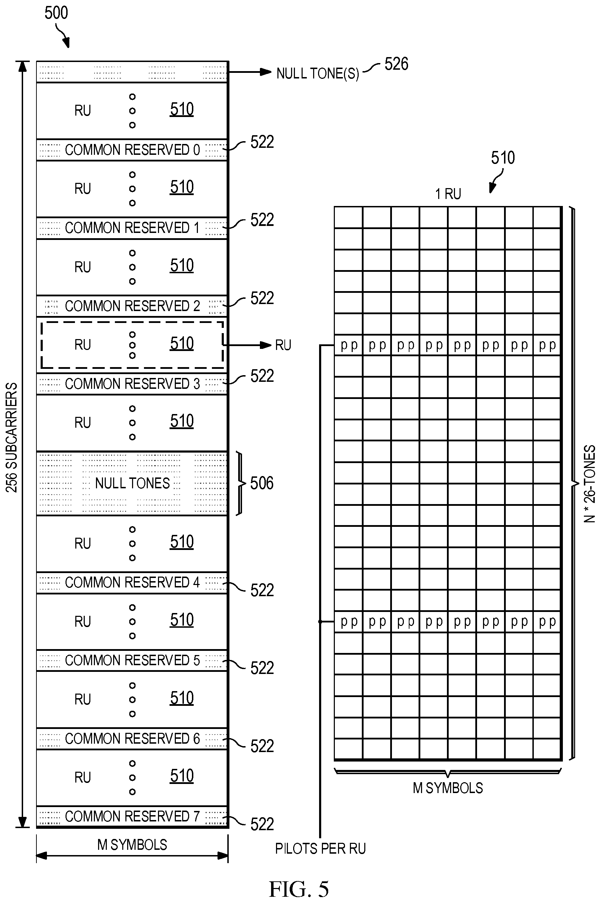

FIG. 5 illustrates a diagram of another embodiment tone allocation scheme for a 256-tone payload 500 in an uplink OFDMA frame communicated over a 20MHz frequency channel. As shown, the 256-tone payload 500 includes two-hundred and thirty-four tones carried in RUs 510, 8 reserved tones 522, and 14 null tones 526. The reserved tones 522 and the null tones 526 are excluded from the RUs 510. In one example, the 14 null tones 526 consist of 13 guard tones and 1 DC tone. In other examples, the 14 null tones 526 consist of multiple DC tones and fewer than 13 guard tones, e.g., 2 DC tones + 12 guard tones, 3 DC tones + 11 guard tones, etc. Each of the RUs 510 consists of a multiple of 26 tones, with each multiple of 26 tones consisting pilot tones and data tones. In the example configuration depicted by FIG. 5, each multiple of 26 tones in a given one of the RUs 510 consists of two pilot tones and twenty-four data tones (2 pilots + 24 data tones). It should be appreciated that other configurations are also possible, e.g., 1 pilot + 25 data tones, 3 pilots + 23 data tones, etc. In the example configuration depicted by FIG. 5, the 8 reserved tones 522 are evenly distributed over the 256-tone payload 500. In such an example, the reserved tones 500 may serve as guard bands between RUs in the uplink OFDMA frame. It should be appreciated that the 8 reserved tones 522 may be distributed differently (e.g., unevenly) in the 256-tone payload 500, and that two or more of the reserved tones 522 may be positioned in a contiguous portion of the 256-tone payload 500. It should also be appreciated that the reserved tones 522 may be used for other purposes. In one embodiment, the 256-tone payload 500 is carried in an uplink OFDMA frame.

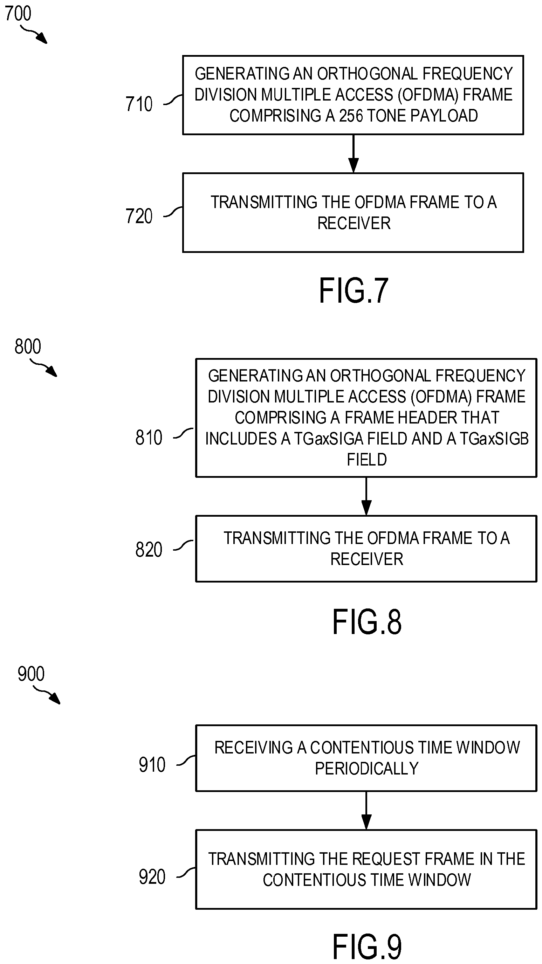

FIG. 7 illustrates a flow chart of an embodiment method 700 for OFDMA frame transmission, as might be performed by a transmitter. As shown, the method 700 begins at step 710, where the transmitter generates an OFDMA frame to be communicated over a 20MHz frequency channel. The OFDMA frame comprises a 256-tone payload that includes 234 data tones, 8 pilot tones, and 14 null tones. The 14 null tones include guard tones and at least one DC tone. In one embodiment, the 14 null tones may include 11 guard tones and 3 DC tones. In another embodiment, the 14 null tones may include 13 guard tones and 1 DC tone. The 234 data tones may form 18 RUs each of which comprising 13 data tones. Subsequently, the method 700 proceeds to step 720, where the transmitter transmits the OFDMA frame to at least one receiver. These steps are generally carried out in sequence, however, under certain circumstances; there may be parallel aspects among the steps.

FIG. 8 illustrates a flow chart of an embodiment method 800 for OFDMA frame transmission, as may be performed by an access point (AP). As shown, the method 800 begins at step 810, where the AP generates an OFDMA frame for communicating over 20MHz frequency channel. The OFDMA frame comprises a frame header and a payload. The OFDMA frame header comprises a legacy preamble, a first signaling (SIGA) field, a second signaling (SIGB) field, and a preamble field. In one embodiment, the SIGA field has a different number of tones than the SIGB field. For example, the SIGA field may consist of 64 tones, and the SIGB field may consist of 256 tones. In another embodiment, the SIGA field has the same number of tones as the SIGB field. The SIGA field may carry an identifier assigned to the AP, and parameters for decoding the SIGB field. The SIGB field may carry OFDMA resource allocation information for STAs in a cell. The SIGA field may exclude resource allocation information. Thereafter, the method 800 proceeds to step 820, where the AP transmits the OFDMA frame to one or more STAs in the cell. These steps are generally carried out in sequence, however, under certain circumstances; there may be parallel aspects among the steps.

FIG. 9 illustrates a flow chart of an embodiment method 900 for requesting uplink resources, as might be performed by a station (STA). As shown, the method 900 begins at step 910, where an STA identifies a contentious time window of an IEEE 802.11 channel. Subsequently, the method 900 proceeds to step 920, where the STA spreads a request frame in the contentious time window of the IEEE 802.11 channel. The request frame is requests that uplink resources in a scheduled time window of the 802.11 channel be allocated to the STA. In some embodiments, the request frame is transmitted using a code division multiple access (CDMA) code associated with the STA to avoid collisions with other STAs transmitting request frames to the AP. These steps are generally carried out in sequence, however, under certain circumstances; there may be parallel aspects among the steps.

In one embodiment, three RUs in an OFDMA frame tone allocation may be processed together for a channel encoding and an interleaving operation in order to accommodate a number of data (or coded) bits per RU in an integer number for the modulation and coding scheme 9 (MCS-9). In such an embodiment, the channel encoding and the interleaving operation may be achieved as the case of 80MHz frequency channel defined in IEEE 802.11ac standard specifications. This allows backward compatibility for IEEE 802.11 networks performing RU basis encoding and interleaving operation. Table 1 shows an MCS level based on bit size per RU or a symbol for the case of 256FFT per 20MHz frequency channel.

**Table 1 (* represents bit per 3 symbols or 3RUs)**

| MCS | QAM | Code rate | Bits per QAM | Number of Data bits per RU or Symbol (UL OFDMA / DL OFDMA / Dl-UL OFDM) | Number of coded bits per RU of Symbol (UL OFDMA / DL OFDMA / Dl-UL OFDM |
|---|---|---|---|---|---|
| 0 | BPSK | ½ | 1 | 96/104/117 | 192/208/234 |
| 1 | QPSK | ½ | 2 | 192/208/234 | 384/416/468 |
| 2 | QPSK | ¾ | 2 | 288/312/351 | 384/416/468 |
| 3 | 16QAM | ½ | 4 | 384/416/468 | 768/832/936 |
| 4 | 16QAM | ¾ | 4 | 576/624/702 | 768/832/936 |
| 5 | 64QAM | 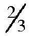 | 6 | 768/832/936 | 1152/1248/1404 |
| 6 | 64QAM | ¾ | 6 | 864/936/1053 | 1152/1248/1404 |
| 7 | 64QAM | 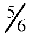 | 6 | 960/1040/1170 | 1152/1248/1404 |
| 8 | 256QAM | ¾ | 8 | 1152/1248/1404 | 1536/16641872 |
| 9 | 256QAM | 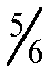 | 8 | 1280/4160*/1560 | 1536/4992*/1872 |

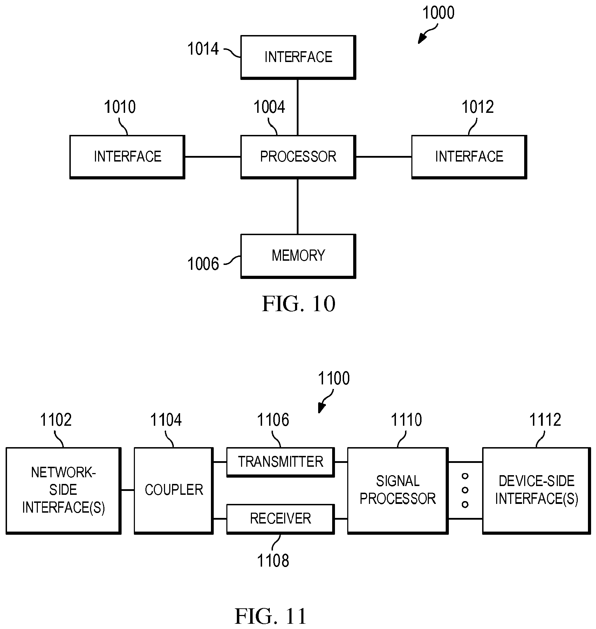

FIG. 10 illustrates a block diagram of an embodiment processing system 1000 for performing methods described herein, which may be installed in a host device. As shown, the processing system 1000 includes a processor 1004, a memory 1006, and interfaces 1010-1014, which may (or may not) be arranged as shown in FIG. 10. The processor 1004 may be any component or collection of components adapted to perform computations and/or other processing related tasks, and the memory 1006 may be any component or collection of components adapted to store programming and/or instructions for execution by the processor 1004. In an embodiment, the memory 1006 includes a non-transitory computer readable medium. The interfaces 1010, 1012, 1014 may be any component or collection of components that allow the processing system 1000 to communicate with other devices/components and/or a user. For example, one or more of the interfaces 1010, 1012, 1014 may be adapted to communicate data, control, or management messages from the processor 1004 to applications installed on the host device and/or a remote device. As another example, one or more of the interfaces 1010, 1012, 1014 may be adapted to allow a user or user device (e.g., personal computer (PC), etc.) to interact/communicate with the processing system 1000. The processing system 1000 may include additional components not depicted in FIG. 10, such as long term storage (e.g., non-volatile memory, etc.).

In some embodiments, the processing system 1000 is included in a network device that is accessing, or part otherwise of, a telecommunications network. In one example, the processing system 1000 is in a network-side device in a wireless or wireline telecommunications network, such as a base station, a relay station, a scheduler, a controller, a gateway, a router, an applications server, or any other device in the telecommunications network. In other embodiments, the processing system 1000 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 1010, 1012, 1014 connects the processing system 1000 to a transceiver adapted to transmit and receive signaling over the telecommunications network. FIG. 11 illustrates a block diagram of a transceiver 1100 adapted to transmit and receive signaling over a telecommunications network. The transceiver 1100 may be installed in a host device. As shown, the transceiver 1100 comprises a network-side interface 1102, a coupler 1104, a transmitter 1106, a receiver 1108, a signal processor 1110, and a device-side interface 1112. The network-side interface 1102 may include any component or collection of components adapted to transmit or receive signaling over a wireless or wireline telecommunications network. The coupler 1104 may include any component or collection of components adapted to facilitate bi-directional communication over the network-side interface 1102. The transmitter 1106 may include any component or collection of components (e.g., up-converter, power amplifier, etc.) adapted to convert a baseband signal into a modulated carrier signal suitable for transmission over the network-side interface 1102. The receiver 1108 may include any component or collection of components (e.g., down-converter, low noise amplifier, etc.) adapted to convert a carrier signal received over the network-side interface 1102 into a baseband signal. The signal processor 1110 may include any component or collection of components adapted to convert a baseband signal into a data signal suitable for communication over the device-side interface(s) 1112, or vice-versa. The device-side interface(s) 1112 may include any component or collection of components adapted to communicate data-signals between the signal processor 1110 and components within the host device (e.g., the processing system 600, local area network (LAN) ports, etc.).

The transceiver 1100 may transmit and receive signaling over any type of communications medium. In some embodiments, the transceiver 1100 transmits and receives signaling over a wireless medium. For example, the transceiver 1100 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 1102 comprises one or more antenna/radiating elements. For example, the network-side interface 1102 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 1100 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

The following references are related to subject matter of the present application. [1] U.S. Provisional Patent Application Serial No. 61/974,282, entitled "UL OFDMA Frame Format and Input/Output Configuration for IFFT module for OFDM(A) Numerologies," filed April 2, 2014; [2] U.S. Provisional Patent Application Serial No. 62/001,394, entitled "System and Method for Utilizing Unused Tones in Tone-Interleaved Long Training Field," filed May 21, 2014.

## Claims

1. A method for transmitting data in a wireless network, the method comprising:
generating, by an access point, an orthogonal frequency division multiple access, OFDMA, frame, wherein the OFDMA frame comprises a first signal, SIGA, field, a second signal, SIGB, field and a data payload field, wherein the SIGA field carries parameters for decoding the SIGB field and the SIGB field carries resource allocation information indicating which resource units, RUs are allocated to the plurality of mobile devices for receiving the data payload field over a 20 Mhz channel; and the data payload field is encoded at 256 FFT sampling rate per 20MHz frequency channel, wherein the data payload field comprises 256 tones in each 20MHz frequency channel, 234 tones are in RUs, and 22 tones are excluded from the RUs,
wherein the RUs comprise at least one or a combination of the following: a first RU including 26 tones consisting of 24 data tones and 2 pilot tones in frequency domain, and a second RU including 52 tones consisting of 48 data tones and 4 pilot tones in frequency domain;
and transmitting the OFDMA frame.

2. The method of claim 1,
wherein the SIGA field is encoded at a 64 point Fast Frequency Transform, FFT, sampling rate per 20MHz frequency channel.

3. The method of claim 1 or claim 2, wherein the OFDMA frame is transmitted over the 20 MegaHertz, MHZ, channel.

4. The method of claim 3, the 22 tones include null tones, pilot tones, reserved tones, or combinations.

5. An access point, AP, comprising:
a processor; and
a computer readable storage medium comprising instructions which, when executed by the processor, cause the access point to:
generate an orthogonal frequency division multiple access, OFDMA, frame, wherein the OFDMA frame comprises a first signal, SIGA, field, a second signal, SIGB, field and a data payload field, wherein the SIGA field carries parameters for decoding the SIGB field and the SIGB field carries resource allocation information indicating which resource units, RUs are allocated to the plurality of mobile devices for receiving the data payload field over a 20Mhz channel; and the data payload field is encoded at 256 FFT sampling rate per 20MHz frequency channel, wherein the data payload field comprises 256 tones in each 20MHz frequency channel, 234 tones are in RUs, and 22 tones are excluded from the RUs,
wherein the RUs comprise: at least one or a combination of the following: a first RU including 26 tones consisting of 24 data tones and 2 pilot tones in frequency domain, and a second RU including 52 tones consisting of 48 data tones and 4 pilot tones in frequency domain; and transmit the OFDMA frame.

6. The AP of claim 5, wherein the SIGA field is encoded at a 64 point Fast Frequency Transform, FFT, sampling rate per 20MHz frequency channel.

7. The AP of claim 5 or claim 6 wherein the OFDMA frame is transmitted over the 20 MegaHertz, MHZ, channel.

8. The AP of claim 7, the 22 tones include null tones, pilot tones, reserved tones, or combinations.

9. A method for receiving data in a wireless network, the method comprising:
receiving, by a mobile device, an orthogonal frequency division multiple access, OFDMA, frame from an access point, the OFDMA frame comprises a first signal, SIGA, field, a second signal, SIGB, field and a data payload field, wherein the SIGA field carries parameters for decoding the SIGB field and the SIGB field carries resource allocation information indicating which resource units, RUs, are allocated to the plurality of mobile devices for receiving the data payload field over a 20Mhz channel; and the data payload field is encoded at 256 FFT sampling rate per 20MHz frequency channel, wherein the data payload field comprises 256 tones in each 20MHz frequency channel, 234 tones are in RUs, and 22 tones are excluded from the RUs;
wherein the RUs comprise at least one or as combination of the following: a first RU including 26 tones consisting of 24 data tones and 2 pilot tones in frequency domain, and a second RU including 52 tones consisting of 48 data tones and 4 pilot tones in frequency domain.

10. A mobile device comprising:
a processor; and
a computer readable storage medium comprising instructions which, when executed by the processor, cause the mobile device to:
receive, an orthogonal frequency division multiple access, OFDMA, frame from an access point, the OFDMA frame comprises a first signal, SIGA, field, a second signal, SIGB, field and a data payload field, and wherein the SIGA field carries parameters for decoding the SIGB field and the SIGB field carries resource allocation information indicating which resource units, RUs, are allocated to the plurality of mobile device devices for receiving the data payload field over a 20 Mhz channel; and the data payload field is encoded at 256 FFT sampling rate per 20MHz frequency channel, wherein the data payload field comprises 256 tones in each 20MHz frequency channel, 234 tones are in RUs, and 22 tones are excluded from the RUs;
wherein the RUs comprise at least one or a combination of the following: a first RU including 26 tones consisting of 24 data tones and 2 pilot tones in frequency domain, and a second RU including 52 tones consisting of 48 data tones and 4 pilot tones in frequency domain.

11. The method according to claim 9, or, the mobile device according to claim 10, wherein the SIGA field is decoded at a 64 point Fast Frequency Transform, FFT, sampling rate per 20MHz frequency channel.

## Patentansprüche

1. Verfahren zum Übertragen von Daten in einem drahtlosen Netzwerk, wobei das Verfahren Folgendes umfasst:
Erzeugen, durch einen Zugangspunkt, eines Rahmens für Orthogonal-Frequenzmultiplex-Mehrfachzugriff bzw. OFDMA-Rahmens, wobei der OFDMA-Rahmen ein Feld eines ersten Signals bzw. SIGA-Feld, ein Feld eines zweiten Signals bzw. SIGB-Feld und ein Nutzdatenfeld umfasst, wobei das SIGA-Feld Parameter zum Decodieren des SIGB-Felds führt und das SIGB-Feld Ressourcenzuteilungsinformationen führt, die angeben, welche Ressourceneinheiten, RUs, der Vielzahl von Mobilgeräten zum Empfangen des Nutzdatenfelds über einen 20 MHz-Kanal zugeteilt sind; und das Nutzdatenfeld mit einer 256-FFT-Abtastrate pro 20 MHz-Frequenzkanal codiert ist, wobei das Nutzdatenfeld 256 Töne in jedem 20 MHz-Frequenzkanal umfasst, sich 234 Töne in RUs befinden und 22 Töne aus den RUs ausgeschlossen sind,
wobei die RUs mindestens eines oder eine Kombination der Folgenden umfassen: eine erste RU, beinhaltend 26 Töne, die aus 24 Datentönen und 2 Pilottönen im Frequenzbereich bestehen, und eine zweite RU, beinhaltend 52 Töne, die aus 48 Datentönen und 4 Pilottönen im Frequenzbereich bestehen; und
Übertragen des OFDMA-Rahmens.

2. Verfahren nach Anspruch 1,
wobei das SIGA-Feld mit einer Abtastrate für eine Schnelle-Frequenz-Transformation, FFT, mit 64 Punkten pro 20 MHz-Frequenzkanal codiert ist.

3. Verfahren nach Anspruch 1 oder Anspruch 2, wobei der OFDMA-Rahmen über den 20 Megahertz-Kanal bzw. 20 MHz-Kanal übertragen wird.

4. Verfahren nach Anspruch 3, die 22 Töne Nulltöne, Pilottöne, reservierte Töne oder Kombinationen beinhalten.

5. Zugangspunkt, AP, umfassend:
einen Prozessor, und
ein computerlesbares Speicherungsmedium, das Anweisungen umfasst, die bei Ausführung durch den Prozessor den Zugangspunkt veranlassen zum:
Erzeugen eines Rahmens für Orthogonal-Frequenzmultiplex-Mehrfachzugriff bzw. OFDMA-Rahmens, wobei der OFDMA-Rahmen ein Feld eines ersten Signals bzw. SIGA-Feld, ein Feld eines zweiten Signals bzw. SIGB-Feld und ein Nutzdatenfeld umfasst, wobei das SIGA-Feld Parameter zum Decodieren des SIGB-Felds führt und das SIGB-Feld Ressourcenzuteilungsinformationen führt, die angeben, welche Ressourceneinheiten, RUs, der Vielzahl von Mobilgeräten zum Empfangen des Nutzdatenfelds über einen 20 MHz-Kanal zugeteilt sind; und das Nutzdatenfeld mit einer 256-FFT-Abtastrate pro 20 MHz-Frequenzkanal codiert ist, wobei das Nutzdatenfeld 256 Töne in jedem 20 MHz-Frequenzkanal umfasst, sich 234 Töne in RUs befinden und 22 Töne aus den RUs ausgeschlossen sind,
wobei die RUs umfassen: mindestens eines oder eine Kombination der Folgenden: eine erste RU, beinhaltend 26 Töne, die aus 24 Datentönen und 2 Pilottönen im Frequenzbereich bestehen, und eine zweite RU, beinhaltend 52 Töne, die aus 48 Datentönen und 4 Pilottönen im Frequenzbereich bestehen; und
Übertragen des OFDMA-Rahmens.

6. AP nach Anspruch 5, wobei das SIGA-Feld mit einer Abtastrate für eine Schnelle-Frequenz-Transformation, FFT, mit 64 Punkten pro 20 MHz-Frequenzkanal codiert ist.

7. AP nach Anspruch 5 oder Anspruch 6, wobei der OFDMA-Rahmen über den 20 Megahertz-Kanal bzw. 20 MHz-Kanal übertragen wird.

8. AP nach Anspruch 7, die 22 Töne Nulltöne, Pilottöne, reservierte Töne oder Kombinationen beinhalten.

9. Verfahren zum Empfangen von Daten in einem drahtlosen Netzwerk, wobei das Verfahren Folgendes umfasst:
Empfangen, durch ein Mobilgerät, eines Rahmens für Orthogonal-Frequenzmultiplex-Mehrfachzugriff bzw. OFDMA-Rahmens von einem Zugangspunkt, wobei der OFDMA-Rahmen ein Feld eines ersten Signals bzw. SIGA-Feld, ein Feld eines zweiten Signals bzw. SIGB-Feld und ein Nutzdatenfeld umfasst, wobei das SIGA-Feld Parameter zum Decodieren des SIGB-Felds führt und das SIGB-Feld Ressourcenzuteilungsinformationen führt, die angeben, welche Ressourceneinheiten, RUs, der Vielzahl von Mobilgeräten zum Empfangen des Nutzdatenfelds über einen 20 MHz-Kanal zugeteilt sind; und das Nutzdatenfeld mit einer 256-FFT-Abtastrate pro 20 MHz-Frequenzkanal codiert ist, wobei das Nutzdatenfeld 256 Töne in jedem 20 MHz-Frequenzkanal umfasst, sich 234 Töne in RUs befinden und 22 Töne aus den RUs ausgeschlossen sind,
wobei die RUs mindestens eines oder als eine Kombination der Folgenden umfassen: eine erste RU, beinhaltend 26 Töne, die aus 24 Datentönen und 2 Pilottönen im Frequenzbereich bestehen, und eine zweite RU, beinhaltend 52 Töne, die aus 48 Datentönen und 4 Pilottönen im Frequenzbereich bestehen.

10. Mobilgerät, umfassend:
einen Prozessor, und
ein computerlesbares Speicherungsmedium, das Anweisungen umfasst, die bei Ausfuhrung durch den Prozessor das Mobilgerät veranlassen zum:
Empfangen eines Rahmens für Orthogonal-Frequenzmultiplex-Mehrfachzugriff bzw. OFDMA-Rahmens von einem Zugangspunkt, wobei der OFDMA-Rahmen ein Feld eines ersten Signals bzw. SIGA-Feld, ein Feld eines zweiten Signals bzw. SIGB-Feld und ein Nutzdatenfeld umfasst, und wobei das SIGA-Feld Parameter zum Decodieren des SIGB-Felds führt und das SIGB-Feld Ressourcenzuteilungsinformationen führt, die angeben, welche Ressourceneinheiten, RUs, der Vielzahl von Mobilgeräten zum Empfangen des Nutzdatenfelds über einen 20 MHz-Kanal zugeteilt sind; und das Nutzdatenfeld mit einer 256-FFT-Abtastrate pro 20 MHz-Frequenzkanal codiert ist,
wobei das Nutzdatenfeld 256 Töne in jedem 20 MHz-Frequenzkanal umfasst, sich 234 Töne in RUs befinden und 22 Töne aus den RUs ausgeschlossen sind,
wobei die RUs mindestens eines oder eine Kombination der Folgenden umfassen: eine erste RU, beinhaltend 26 Töne, die aus 24 Datentönen und 2 Pilottönen im Frequenzbereich bestehen, und eine zweite RU, beinhaltend 52 Töne, die aus 48 Datentönen und 4 Pilottönen im Frequenzbereich bestehen.

11. Verfahren nach Anspruch 9 oder das Mobilgerät nach Anspruch 10, wobei das SIGA-Feld mit einer Abtastrate für eine Schnelle-Frequenz-Transformation, FFT, mit 64 Punkten pro 20 MHz-Frequenzkanal codiert ist.

## Revendications

1. Procédé de transmission de données dans un réseau sans fil, le procédé comprenant :
la génération, par un point d'accès, d'une trame à accès multiple par répartition orthogonale de la fréquence, OFDMA, la trame OFDMA comprenant un champ de premier signal, SIGA, un champ de second signal, SIGB et un champ de charge utile de données, le champ SIGA acheminant des paramètres pour décoder le champ SIGB et le champ SIGB acheminant des informations d'attribution de ressources indiquant quelles unités de ressources, RU, sont attribuées à la pluralité de dispositifs mobiles pour recevoir le champ de charge utile de données sur un canal de 20 MHz ;
et le champ de charge utile de données étant codé à un taux d'échantillonnage de 256 FFT par canal de fréquences de 20 MHz, le champ de charge utile de données comprenant 256 tonalités dans chaque canal de fréquences de 20 MHz, 234 tonalités étant dans des RU, et 22 tonalités étant exclues des RU,
dans lequel les RU comprennent au moins un élément ou une combinaison de ce qui suit : une première RU incluant 26 tonalités se composant de 24 tonalités de données et de 2 tonalités pilotes dans un domaine de fréquence, et une seconde RU incluant 52 tonalités se composant de 48 tonalités de données et de 4 tonalités pilotes dans un domaine de fréquence ;
et la transmission de la trame OFDMA.

2. Procédé selon la revendication 1, dans lequel le champ SIGA est codé à un taux d'échantillonnage d'une transformée de fréquence rapide, FFT, de 64 points par canal de fréquences de 20 MHz.

3. Procédé selon la revendication 1 ou la revendication 2, dans lequel la trame OFDMA est transmise sur le canal de 20 Mégahertz, MHz.

4. Procédé selon la revendication 3, les 22 tonalités incluent des tonalités nulles, des tonalités pilotes, des tonalités réservées ou des combinaisons.

5. Point d'accès, AP, comprenant :
un processeur ; et
un support de stockage lisible par ordinateur comprenant des instructions qui,
lorsqu'elles sont exécutées par le processeur, amènent le point d'accès à :
générer une trame à accès multiple par répartition orthogonale de la fréquence, OFDMA, la trame OFDMA comprenant un champ de premier signal, SIGA, un champ de second signal, SIGB et un champ de charge utile de données, le champ SIGA acheminant des paramètres pour décoder le champ SIGB et le champ SIGB acheminant des informations d'attribution de ressources indiquant quelles unités de ressources, RU, sont attribuées à la pluralité de dispositifs mobiles pour recevoir le champ de charge utile de données sur un canal de 20 Mhz ;
et le champ de charge utile de données étant codé à un taux d'échantillonnage de 256 FFT par canal de fréquences de 20 MHz, le champ de charge utile de données comprenant 256 tonalités dans chaque canal de fréquences de 20 MHz, 234 tonalités étant dans des RU, et 22 tonalités étant exclues des RU,
dans lequel les RU comprennent : au moins un élément ou une combinaison de ce qui suit : une première RU incluant 26 tonalités se composant de 24 tonalités de données et de 2 tonalités pilotes dans un domaine de fréquence, et une seconde RU incluant 52 tonalités se composant de 48 tonalités de données et de 4 tonalités pilotes dans un domaine de fréquence ; et
transmettre la trame OFDMA.

6. AP selon la revendication 5, dans lequel le champ SIGA est codé à un taux d'échantillonnage d'une transformée de fréquence rapide, FFT, de 64 points par canal de fréquences de 20 MHz.

7. AP selon la revendication 5 ou la revendication 6, dans lequel la trame OFDMA est transmise sur le canal de 20 Mégahertz, MHz.

8. AP selon la revendication 7, les 22 tonalités incluent des tonalités nulles, des tonalités pilotes, des tonalités réservées ou des combinaisons.

9. Procédé de réception de données dans un réseau sans fil, le procédé comprenant :
la réception, par un dispositif mobile, d'une trame à accès multiple par répartition orthogonale de la fréquence, OFDMA, en provenance d'un point d'accès, la trame OFDMA comprenant un champ de premier signal, SIGA, un champ de second signal,
SIGB et un champ de charge utile de données, le champ SIGA acheminant des paramètres pour décoder le champ SIGB et le champ SIGB acheminant des informations d'attribution de ressources indiquant quelles unités de ressources, RU,
sont attribuées à la pluralité de dispositifs mobiles pour recevoir le champ de charge utile de données sur un canal de 20 Mhz ;
et le champ de charge utile de données étant codé à un taux d'échantillonnage de 256 FFT par canal de fréquences de 20 MHz, le champ de charge utile de données comprenant 256 tonalités dans chaque canal de fréquences de 20 MHz, 234 tonalités étant dans des RU, et 22 tonalités étant exclues des RU,
dans lequel les RU comprennent au moins un élément ou une combinaison de ce qui suit : une première RU incluant 26 tonalités se composant de 24 tonalités de données et de 2 tonalités pilotes dans un domaine de fréquence, et une seconde RU incluant 52 tonalités se composant de 48 tonalités de données et de 4 tonalités pilotes dans un domaine de fréquence.

10. Dispositif mobile comprenant :
un processeur ; et
un support de stockage lisible par ordinateur comprenant des instructions qui,
lorsqu'elles sont exécutées par le processeur, amènent le dispositif mobile à :
recevoir une trame à accès multiple par répartition orthogonale de la fréquence, OFDMA, en provenance d'un point d'accès, la trame OFDMA comprenant un champ de premier signal, SIGA, un champ de second signal, SIGB et un champ de charge utile de données, le champ SIGA acheminant des paramètres pour décoder le champ SIGB et le champ SIGB acheminant des informations d'attribution de ressources indiquant quelles unités de ressources, RU, sont attribuées à la pluralité de dispositifs mobiles pour recevoir le champ de charge utile de données sur un canal de 20 Mhz ;
et le champ de charge utile de données étant codé à un taux d'échantillonnage de 256 FFT par canal de fréquences de 20 MHz, le champ de charge utile de données comprenant 256 tonalités dans chaque canal de fréquences de 20 MHz, 234 tonalités étant dans des RU, et 22 tonalités étant exclues des RU ;
dans lequel les RU comprennent au moins un élément ou une combinaison de ce qui suit : une première RU incluant 26 tonalités se composant de 24 tonalités de données et de 2 tonalités pilotes dans un domaine de fréquence, et une seconde RU incluant 52 tonalités se composant de 48 tonalités de données et de 4 tonalités pilotes dans un domaine de fréquence.

11. Procédé selon la revendication 9, ou dispositif mobile selon la revendication 10, dans lequel le champ SIGA est décodé à un taux d'échantillonnage d'une transformée de fréquence rapide, FFT, de 64 points par canal de fréquences de 20 MHz.
